# EUROPEAN PATENT SPECIFICATION

(11) **EP 3 396 809 B1**
(45) Date of publication and mention of the grant of the patent: **19.10.2022**
(21) Application number: 17834609.4
(22) Date of filing: 11.05.2017
(51) Int. Cl.: H02J 7/00, H01M 10/42, B60L 3/00, B60L 58/22, B60L 58/15, H01M 10/44, B60L 50/50

(54) **BATTERY BALANCING DEVICE AND METHOD**
BATTERIEAUSGLEICHSVORRICHTUNG UND -VERFAHREN
DISPOSITIF ET PROCÉDÉ D'ÉQUILIBRAGE DE BATTERIE

(30) Priority: 29.07.2016 KR 20160097478
(43) Date of publication of application: 31.10.2018
(73) Proprietor: LG Energy Solution, Ltd., Seoul 07335 (KR)
(72) Inventor: LEE, Keunwook, Daejeon 34122 (KR); LEE, Sang Hoon, Daejeon 34122 (KR); PARK, Jun Cheol, Daejeon 34122 (KR); CHOI, Yean Sik, Daejeon 34122 (KR)
(74) Representative: Plasseraud IP
(86) International application number: PCT/KR2017/004859
(87) International publication number: WO 2018/021664

(56) References cited:
- EP-A1- 3 043 440
- WO-A1-2015/056068
- FR-A1- 2 986 383
- KR-A- 20080 080 864
- KR-A- 20140 124 470
- KR-B1- 101 165 593
- KR-B1- 101 619 770
- US-A1- 2003 076 642
- US-A1- 2014 111 160

## Description

### [Technical Field]

This application claims priority to and the benefit of Korean Patent Application No. 10-2016-0097478 filed in the Korean Intellectual Property Office on July 29, 2016.

The present invention relates to an apparatus and a method of balancing a battery, and more particularly, to an apparatus and a method of balancing a battery, in which a control unit controls an operation of a balancing unit that performs balancing of a battery cell in response to a voltage value of the battery cell included in a battery, and a self-discharging unit discharges the battery cell according to whether the voltage value of the battery cell exceeds a predetermined first reference voltage value during a non-operation of the balancing unit.

### [Background Art]

Recently, interest in an electric product, which can be driven by using a secondary battery, has increased due to depletion of fossil energy, and environmental pollution due to use of fossil energy. Accordingly, technology development and demands for a mobile device, an electric vehicle (EV), a hybrid vehicle (HV), an energy storage system (ESS), an uninterruptible power supply (UPS), and the like increase, and thus demands for the secondary battery as an energy source have sharply increased.

The secondary battery attracts attention as a new energy source that is environmentally-friendly and has improved energy efficiency in that it is possible to innovatively decrease use of fossil energy, which is the primary advantage, while not generating a by-product when using energy.

Particularly, a secondary battery used in an EV, an HV, an ESS, and a UPS is configured by connecting a plurality of battery cells in order to charge or discharge high-output and large capacity power. Battery cells of the secondary battery ideally need to have the same characteristic, but the battery cells have a deviation in capacity, impedance, and internal resistance, and the deviation increases according to the performance of a charging/discharging of the secondary battery. Due to the deviation between the battery cells, a specific battery cell is overcharged or overdischarged, so that a life of the battery cell is decreased, and further, there is a problem in that even a life of the secondary battery is decreased.

Accordingly, in order to improve stability and a life of the battery cell, a balancing technology for uniformly maintaining voltages of the battery cells is applied to the secondary battery. More particularly, the method of uniformly balancing a voltage of each battery cell included in the secondary battery includes active balancing which supplies a charging current to a battery cell having a relatively low voltage and increases the voltage, passive balancing which discharges a battery cell having a relatively high voltage and drops the voltage, and the like.

Particularly, in order to implement the passive balancing technology, a balancing circuit including a resistor consuming power of the battery cell, a switching element controlling electricity conduction between the battery cell and the resistor, and a control unit controlling on or off of the switching element according to a voltage of the battery cell is provided in the secondary battery.

However, in the existing balancing circuit, when the control unit is abnormally operated, the switching on/off of the switching element controlling electricity conduction between the battery cell and the resistor is not normally controlled and the switching element is not switched on when the discharging of the battery cell is required, so that there is a problem in that the battery cell is overcharged and a life of the battery cell is decreased, and even a life of the secondary battery is decreased due to voltage imbalance between the battery cells.

In this respect, in order to solve the foregoing problems, the present inventor invented an apparatus and a method of balancing a battery, in which a control unit controls an operation of a balancing unit that performs balancing of a battery cell in response to a voltage value of the battery cell included in a battery, and a self-discharging unit discharges the battery cell according to whether the voltage value of the battery cell exceeds a predetermined first reference voltage value during a non-operation of the balancing unit.

EP 3043440 A1 relates to a battery monitoring device monitoring a battery unit connecting battery blocks, the battery unit being configured by each of the battery blocks connecting battery cells and notably including: a voltage detection circuit, a first equalization circuit, a resistor element, a second equalization circuit and a controller.

US 2014/0111160 A1 relates to an electrical storage system notably including: serially connected electrical storage blocks; a voltage detection circuit; a protection circuit; a first resistor; a discharge circuit; and a controller.

FR 2986383 A1 relates to management of an electric storage battery with branches electrically connected to each other in a parallel connection and with a storage system electrically connected between them in a series arrangement, comprising a balanced state of charge.

WO 2015056068 A1 relates to an electric storage system notably including plural electric storage elements, a voltage detection circuit, a discharging circuit, and a controller.

### [Detailed Description of the Invention]

### [Technical Problem]

An object of the present invention is to provide an apparatus and a method of balancing a battery, in which a control unit controls an operation of a balancing unit that performs balancing of a battery cell in response to a voltage value of the battery cell included in a battery, and a self-discharging unit discharges the battery cell according to whether the voltage value of the battery cell exceeds a predetermined first reference voltage value during a non-operation of the balancing unit, so that even though the control unit has a problem, when the voltage of the first reference voltage value or larger is charged in the battery cell, it is possible to prevent the battery cell from being overcharged by discharging the battery cell.

### [Technical Solution]

An apparatus for balancing a battery according to the present invention is defined in claim 1.

In the exemplary embodiment, the self-discharging unit may be any one of a zener diode and a transient voltage suppression (TVS) diode.

In the exemplary embodiment, when the self-discharging unit is the zener diode, the first reference voltage value may be a breakdown voltage value of the zener diode.

A method of balancing a battery according to the present invention is defined in claim 4.

In the method of balancing the battery, the self-discharging unit may be any one of a zener diode and a transient voltage suppression (TVS) diode.

In the method of balancing the battery, when the self-discharging unit is the zener diode, the first reference voltage value may be a breakdown voltage value of the zener diode.

### [Advantageous Effects]

In the apparatus and the method of balancing a battery according to the present invention, the control unit controls an operation of the balancing unit that performs balancing of a battery cell in response to a voltage value of the battery cell included in a battery, and the self-discharging unit discharges the battery cell according to whether the voltage value of the battery cell exceeds a predetermined first reference voltage value during a non-operation of the balancing unit, so that even though the control unit has a problem, when the voltage of the first reference voltage value or larger is charged in the battery cell, it is possible to prevent the battery cell from being overcharged by discharging the battery cell.

### [Brief Description of Drawings]

FIG. 1 is a diagram schematically illustrating an electric vehicle to which a battery balancing apparatus according to an exemplary embodiment of the present invention is applicable.
FIG. 2 is a block diagram illustrating a configuration of the battery balancing apparatus according to the exemplary embodiment of the present invention.
FIG. 3 is a diagram illustrating an example of a particular configuration of the battery balancing apparatus according to the exemplary embodiment of the present invention.
FIG. 4 is a flowchart for describing a battery balancing method according to an exemplary embodiment of the present invention.

### [Mode for carrying out the invention]

The present invention will be described in detail below with reference to the accompanying drawings. Herein, a repeated description, and the detailed description of a known function and configuration that may make the purpose of the present invention unnecessarily ambiguous will be omitted. Exemplary embodiments of the present invention are provided so as to more completely explain the present invention to those skilled in the art. Accordingly, the shape, the size, etc., of elements in the drawings may be exaggerated for a clearer description.

Throughout the specification, unless explicitly described to the contrary, when it is said that a specific part "comprises" a specific constituent element, it means that other constituent elements may be further included, not that other constituent elements are excluded.

In addition, the term "... unit" described in the specification means a unit for processing at least one function and operation and may be implemented by hardware components or software components and combinations thereof.

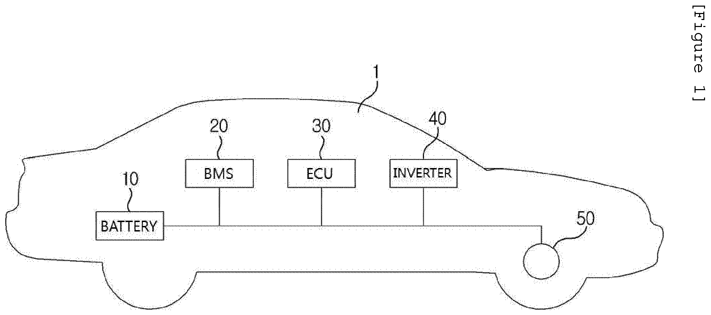

FIG. 1 is a diagram schematically illustrating an electric vehicle to which a battery balancing apparatus according to an exemplary embodiment of the present invention is applicable.

FIG. 1 illustrates an example, in which the battery balancing apparatus according to the exemplary embodiment of the present invention is applied to the electric vehicle, but the battery balancing apparatus according to the exemplary embodiment of the present invention is applicable to any technical field, such as a mobile device, an energy storage system, or an uninterruptible power supply, to which a secondary battery is applicable, in addition to the electric vehicle.

An electric vehicle 1 may include a battery 10, a battery management system 20, an electronic control unit (ECU) 30, an inverter 40, and a motor 50.

The battery 10 is an electric energy source which provides driving force to the motor 50 and drives the electric vehicle 1. The battery 10 may be charged or discharged by the inverter 40 according to the driving of the motor 50 or an internal combustion engine (not illustrated).

Herein, the kind of battery 10 is not particularly limited, and may include, for example, a lithium ion battery, a lithium polymer battery, a nickel cadmium battery, a nickel hydrogen battery, and a nickel zinc battery.

The BMS 20 estimates a state of the battery 10, and manages the battery 10 by using information on the estimated state. For example, the BMS 20 estimates and manages state information of the battery 10, such as a state of charging (SOC), a state of health (SOH), a maximum input/output power allowance quantity, and an output voltage, about the battery 10. Further, the BMS 20 controls a charge or a discharge of the battery 10 by using the state information, and further, may estimate a replacement time of the battery 10 by using the state information.

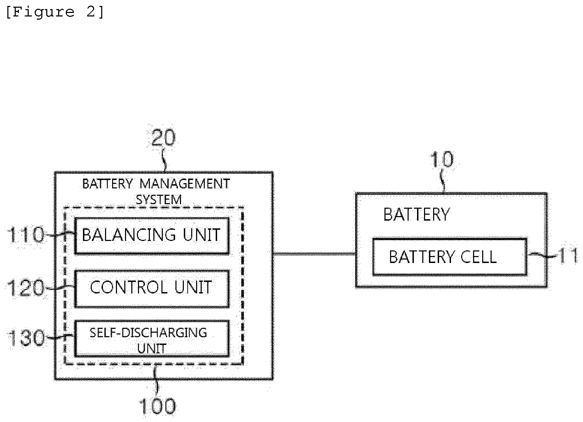

Further, the BMS 20 may include a battery balancing apparatus 100 (FIG. 2) which is to be described below. The battery balancing apparatus 100 may control an operation of a balancing unit which performs balancing of a battery cell in response to a voltage value of a battery cell included in a battery 100, and discharge the battery cell according to whether the voltage value of the battery cell exceeds a predetermined first reference voltage value during a non-operation of the balancing unit, thereby preventing the battery cell from being overcharged.

The ECU 30 is an electronic control device controlling a state of the electric vehicle 1. For example, the ECU 30 determines the degree of torque based on information, such as an accelerator, a break, and a speed, and controls an output of the motor 50 to be matched to the torque information.

Further, the ECU 30 transmits a control signal to the inverter 40 so that the battery 10 is chargeable or dischargeable based on the station information, such as an SOC and an SOH, of the battery 10 received by the BMS 20.

The inverter 40 allows the battery 10 to be charged or discharged based on a control signal of the ECU 30.

The motor 50 drives the electric vehicle 1 based on the control information (for example, torque information) transmitted from the ECU 30 by using electric energy of the battery 10.

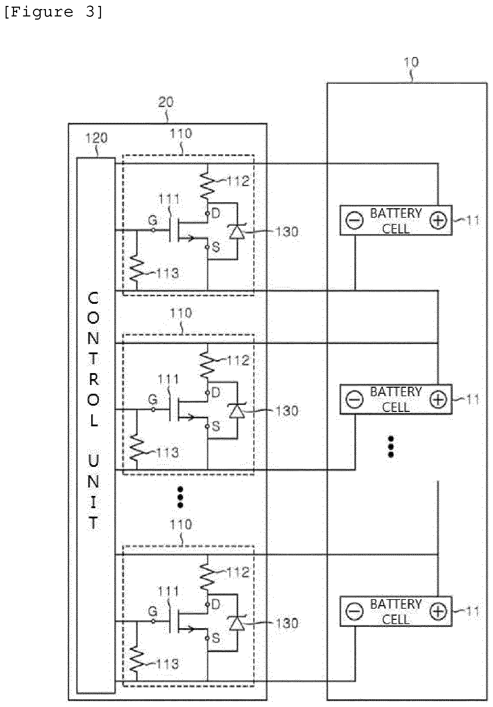

FIG. 2 is a block diagram illustrating a configuration of the battery balancing apparatus according to the exemplary embodiment of the present invention, and FIG. 3 is a diagram illustrating an example of a particular configuration of the battery balancing apparatus according to the exemplary embodiment of the present invention.

Referring to FIGS. 2 and 3, the battery balancing apparatus 100 includes a balancing unit 110, a control unit 120, and a self-discharging unit 130. The battery balancing apparatuses 100 illustrated in FIGS. 1 and 2 are the exemplary embodiment, and constituent elements thereof are not limited to the exemplary embodiment illustrated in FIGS. 2 and 3, and may be added, changed, or deleted as necessary.

The battery balancing apparatus 100 may be included in the battery 10 including battery cells 11, and the BMS 20, which calculates an SOC, an SOH, and a maximum input/output power allowance quantity of the battery cell 11 based on a voltage, a current, and a temperature of each of the battery cells 11, and controls a charge or a discharge of the battery cell 11 by using the calculated state information (the SOC, the SOH, and the maximum input/output power allowance quantity) of the battery cell 11.

The balancing unit 110 may serve to balance a voltage charged in the battery cell 11 included in the battery 10. More particularly, when a voltage value of the battery cell 11 is equal to or larger than a predetermined second reference voltage value, the balancing unit 110 performs passive balancing of discharging the battery cell 11. To this end, the balancing unit 110 includes a switching element 111 and a balancing resistor 112.

Herein, the switching element 111 is a metal oxide silicon field effect transistor (MOS FET) device.

The balancing unit 110 may further include a gate resistor 113 for adjusting a gate voltage of the MOS FET device, in addition to the balancing resistor 112.

Hereinafter, the balancing unit 110, in which the switching element 111 is the MOS FET device, will be described.

The switching element 111 includes a drain terminal D, a gate terminal G, and a source terminal S, and the drain terminal D and the gate terminal G may be connected to the balancing resistor 112 and the gate resistor 113, respectively.

When a gate voltage of a threshold voltage or larger is applied to the gate terminal G of the switching element 111, the drain terminal D and the source terminal S are electrically conducted, so that a current may flow in the balancing resistor 112 connected with the drain terminal D.

In this case, the current flowing in the balancing resistor 112 is a current output from the battery cell 11 in order to perform the balancing of the battery cell 11 according to the application of the voltage having the predetermined first reference voltage value or larger to the battery cell 11.

That is, the switching element 111 is electrically conducted and the current output from the battery cell 11 flows in the balancing resistor 112, so that the battery cell 11 is discharged, and thus, the voltage value of the battery cell 11, which is charged with the voltage having the predetermined first reference voltage value or larger, may be decreased.

In the meantime, in order to adjust a gate voltage applied to the gate terminal G in response to the threshold voltage of the switching element 111, a resistance value of the gate resistor 113 may be changed.

The control unit 120 serves to control an operation of the balancing unit 110 in response to a voltage value of the battery cell 11.

More particularly, when the voltage value of the battery cell 11 is equal to or larger than the predetermined second reference voltage value, the control unit 120 applies a gate voltage having the threshold voltage or larger of the switching element 111 to the gate terminal G and control an operation state of the switching element 111 to be on. Herein, the predetermined second reference voltage value is a voltage value serving as a reference for determining whether to perform the balancing of the battery cell 11.

Accordingly, the control unit 120 allows the current to flow in the balancing resistor 112 connected with the drain terminal D of the switching element 111, thereby discharging the battery cell 11.

In contrast to this, when the voltage value of the battery cell 11 is smaller than the predetermined second reference voltage value, the control unit 120 may control an operation state of the switching element 111 to be off and may not discharge the battery cell 11.

In this case, the control unit 120 may be any one of a micro controller unit (MCU) and an application specific integrated circuit (ASIC).

In the meantime, when a communication problem is generated between the control unit 120 and the switching element 111 or an error is generated in the control unit 120 and the control unit 120 is erroneously operated, the switching element 111 may not be switched from off to on even though the voltage value of the battery cell 11 is equal to or larger than the predetermined second reference voltage value.

Further, when the switching element 111 deteriorates, the switching element 111 may not be switched from off to on even though the voltage value of the battery cell 11 is equal to or larger than the predetermined second reference voltage value.

Accordingly, the voltage that is equal to or larger than the predetermined second reference voltage value is charged in the battery cell 11, so that imbalance is generated between the battery cells 11.

When the balancing unit 110 is not operated, the self-discharging unit 130 is connected to the switching element 111 in parallel, so that an inverse voltage of the voltage of the battery cell 11 is applied, and serves to discharge the battery cell 11 according to whether the voltage of the battery cell 11 exceeds the predetermined first reference voltage value.

More particularly, when the switching element 111 is not operated and is not switched on, and the battery cell 11 is not discharged even though the voltage that is equal to or larger than the predetermined second reference voltage value is charged in the battery cell 11, the self-discharging unit 130 discharges the battery cell 11 when the voltage value of the battery cell 11 exceeds the predetermined first reference voltage value.

In the contrast to this, when the voltage value of the battery cell 11 is equal to or smaller than the predetermined first reference voltage value, the self-discharging unit 130 may not discharge the battery cell 11.

Herein, the predetermined first reference voltage value may be a voltage value larger than the predetermined second reference voltage value.

In the meantime, the self-discharging unit 130 may be any one of a zener diode and a transient voltage suppression (TVS) diode, and when the self-discharging unit 130 is the zener diode, the predetermined first reference voltage value may be a breakdown voltage value of the zener diode.

A process of discharging the battery cell 11 when the self-discharging unit 130 is the zener diode will be described in detail.

When the switching element 111 is not operated and is not switched on, and the battery cell 11 is not discharged even though the voltage that is equal to or larger than the predetermined second reference voltage value is charged in the battery cell 11, the voltage of the battery cell 11 may be charged with the predetermined first reference voltage value which exceeds the predetermined second reference voltage value.

Accordingly, the voltage of the first reference voltage value exceeding the breakdown voltage value is applied to both ends of the self-discharging unit 130 that is the zener diode, and thus, the zener diode is electrically conducted and a current flows in the balancing resistor 112, thereby discharging the battery cell 11.

Then, the voltage of the battery cell 11 is decreased by the discharging of the battery cell 11, so that the voltage having the predetermined first reference voltage value or smaller may be charged in the battery cell 11.

Accordingly, the voltage of the breakdown voltage value or smaller is applied to both ends of the self-discharging unit 130 that is the zener diode and the zener diode is turned off, so that the discharging of the battery cell 11 may be stopped.

Accordingly, in the battery balancing apparatus 100 according to the present invention, even though the switching element 111 performing the balancing of the battery cell 11 and the control unit 120 controlling the switching element 11 are erroneously operated, when a voltage value of the battery cell 11 exceeds the predetermined first reference voltage value, the battery cell 11 is discharged through the self-discharging unit 130, thereby preventing the battery cell 11 from being overcharged.

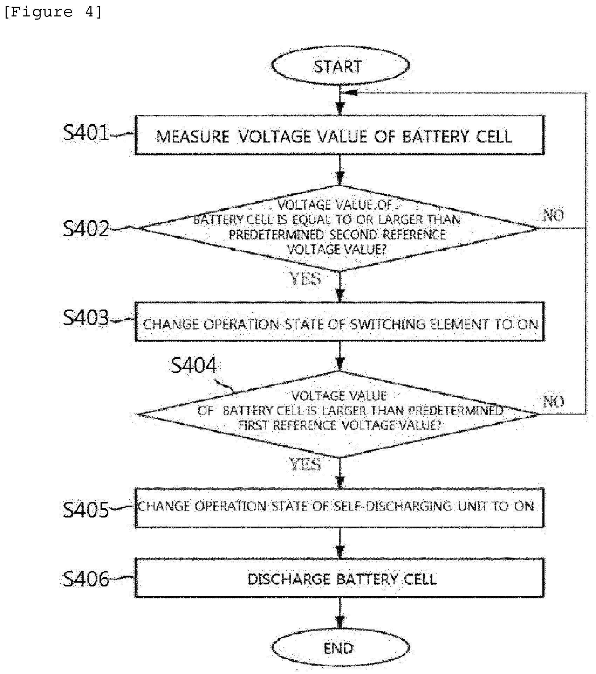

FIG. 4 is a flowchart for describing a battery balancing method according to an exemplary embodiment of the present invention.

Referring to FIG. 4, the BMS measures a voltage applied to a battery cell (S601), and the control unit controls an operation state of the switching element in response to the measured voltage of the battery cell to perform balancing of the battery cell.

More particularly, when a voltage of the battery cell is equal to or larger than a predetermined second reference voltage value (S402), the control unit applies a gate voltage of a threshold voltage or larger of the switching element to a gate terminal and changes an operation state of the switching element to be on (S403). Accordingly, a current flows in the balancing resistor and the battery cell is discharged. In contrast to this, when the voltage of the battery cell is smaller than a predetermined second reference voltage value (S402), the control unit does not change the operation state of the switching element and returns to the start.

In the case where the control unit or the switching element is erroneously operated, when the battery cell is not balanced, that is, not discharged in operations S401 to S403, so that the voltage of the battery cell is increased to a predetermined second reference voltage value or more and exceeds the predetermined first reference voltage value (S404), the operation state of the self-discharging unit that is connected with the switching element in parallel is changed to be on (S405). Accordingly, a current flows in the balancing resistor, so that the battery cell is discharged (S406), and the voltage of the battery cell is decreased to be the predetermined first reference voltage value or smaller.

Accordingly, in the battery balancing method according to the present invention, even though the switching element performing the balancing of the battery cell and the control unit controlling the switching element are erroneously operated, when a voltage value of the battery cell exceeds the predetermined first reference voltage value, the battery cell is discharged through the self-discharging unit, thereby preventing the battery cell from being overcharged.

## Claims

1. An apparatus (100) for balancing a battery (10), the apparatus (100) comprising:
a plurality of balancing units (110) which are connected with a plurality of respective battery cells (11) included in the battery (10), wherein the plurality of respective battery cells (11) are connected in series to one another,
wherein each balancing unit is configured to perform balancing of its respective battery cell (11), wherein each balancing unit comprises:
a respective balancing resistor (112) having a first end and a second end, the first end connected to the positive terminal of its respective battery cell,
wherein the balancing resistor is configured to consume power of its respective battery cell (11); and
a respective switching element (111) formed by a MOSFET device having a drain terminal (D), a gate terminal (G) and a source terminal (S), wherein the drain terminal is connected to the second end of the respective balancing resistor, the source terminal (S) is connected to a negative terminal of the respective battery cell, wherein the switching element is configured to conduct or block a current flowing from the respective battery cell (11) to the respective balancing resistor (112);
a control unit (120) connected to the gate terminal of the MOSFET device and configured to control an operation of respective balancing unit (110) in response to a voltage value of its respective battery cell (11), wherein when the voltage value of its respective battery cell is equal to or larger than a predetermined second reference voltage value, the control unit is configured to switch the respective switching element to be on and allow a current to flow in the respective balancing resistor to discharge its respective battery cell; and
a respective self-discharging unit (130) connected in parallel to its respective switching element so that the voltage of its respective battery cell is applied as an inverse voltage to the respective self-discharging unit (130), wherein the respective self-discharging unit is configured to prevent the battery cell from being overcharged by discharging its respective battery cell (11) when a voltage of the respective battery cell (11) exceeds a predetermined first reference voltage value during a non-operation of the respective balancing unit (110), so that when the voltage value of the respective battery cell (11) exceeds the first reference voltage value, the respective self-discharging unit (130) is configured to electrically conduct the current flowing from the respective battery cell (11) to the respective balancing resistor (112) to discharge the respective battery cell (11).

2. The apparatus of claim 1, wherein each self-discharging unit (130) is any one of a zener diode and a transient voltage suppression (TVS) diode.

3. The apparatus of claim 2, wherein each self-discharging unit (130) is the zener diode, and wherein the first reference voltage value is a breakdown voltage value of the zener diode.

4. A method of balancing a battery (10), the method comprising:
providing a plurality of balancing units (110) which are connected with a plurality of respective battery cells (11) included in the battery (10) to perform balancing of each battery cell (11), wherein the plurality of respective battery cells (11) are connected in series to one another, each balancing unit (110) comprising:
a respective balancing resistor (112) having a first end and a second end, the first end connected to the positive terminal of its respective cell battery, wherein the respective balancing resistor is configured to consume power of its respective battery cell (11); and
a respective switching element (111) formed by a MOSFET device having a drain terminal (D), a gate terminal (G) and a source terminal (S), wherein the drain terminal is connected to the second end of the respective balancing resistor, the source terminal is connected to a negative terminal of the respective battery cell, wherein the switching element is configured to conduct or block a current flowing from the respective battery cell (11) to the respective balancing resistor (112);
controlling, by a control unit (120) connected to the gate terminal of the MOSFET device and configured to control an operation of the balancing unit (110) in response to a voltage value of its respective battery cell (11), wherein when the voltage value of its respective battery cell is equal to or larger than a predetermined second reference voltage value, the control unit is configured to switch the respective switching element to be on and allow a current to flow in the respective balancing resistor to discharge its respective battery cell; and
discharging, by a respective self-discharging unit (130) connected in parallel to its respective switching element so that the voltage of its respective battery cell is applied as an inverse voltage to the respective self-discharging unit (130), wherein the respective self-discharging unit is configured to prevent the battery cell from being overcharged by discharging its respective battery cell (11) when a voltage value of the respective battery cell (11) exceeds a predetermined first reference voltage value during a non-operation of the respective balancing unit (110), so that when the respective switching element (111) is not operated and the voltage value of the respective battery cell (11) exceeds the first reference voltage value, the respective self-discharging unit (130) is configured to electrically conduct the current flowing from the respective battery cell (11) to the respective balancing resistor (112) to discharge the respective battery cell (11).

5. The method of claim 4, wherein each self-discharging unit (130) is any one of a zener diode and a transient voltage suppression (TVS) diode.

6. The method of claim 5, wherein each self-discharging unit (130) is the zener diode, and wherein the first reference voltage value is a breakdown voltage value of the zener diode.

## Patentansprüche

1. Vorrichtung (100) zum Ausgleichen einer Batterie (10), wobei die Vorrichtung (100) umfasst:
eine Mehrzahl von Ausgleichseinheiten (110), welche mit einer Mehrzahl jeweiliger Batteriezellen (11) verbunden sind, welche in der Batterie (10) umfasst sind, wobei die Mehrzahl jeweiliger Batteriezellen (11) zueinander in Reihe geschaltet sind,
wobei jede Ausgleichseinheit dazu eingerichtet ist, ein Ausgleichen ihrer jeweiligen Batteriezelle (11) durchzuführen, wobei jede Ausgleichseinheit umfasst:
einen jeweiligen Ausgleichswiderstand (112), welcher ein erstes Ende und ein zweites Ende aufweist, wobei das erste Ende mit dem positiven Anschluss seiner jeweiligen Batteriezelle verbunden ist,
wobei der Ausgleichswiderstand dazu eingerichtet ist, Leistung seiner jeweiligen Batteriezelle (11) zu verbrauchen; und
ein jeweiliges Schaltelement (111), welches durch eine MOSFET-Vorrichtung gebildet ist, welche einen Drain-Anschluss (D), einen Gate-Anschluss (G) und einen Source-Anschluss (S) aufweist, wobei der Drain-Anschluss mit dem zweiten Ende des jeweiligen Ausgleichswiderstands verbunden ist, wobei der Source-Anschluss (S) mit einem negativen Anschluss der jeweiligen Batteriezelle verbunden ist, wobei das Schaltelement dazu eingerichtet ist, einen Strom, welcher von der jeweiligen Batteriezelle (11) zu dem jeweiligen Ausgleichswiderstand (112) fließt, zu leiten oder zu blockieren;
eine Steuereinheit (120), welche mit dem Gate-Anschluss der MOSFET-Vorrichtung verbunden ist und dazu eingerichtet ist, einen Betrieb der jeweiligen Ausgleichseinheit (110) in Reaktion auf einen Spannungswert ihrer jeweiligen Batteriezelle (11) zu steuern, wobei, wenn der Spannungswert ihrer jeweiligen Batteriezelle gleich wie oder größer als ein vorbestimmter zweiter Referenzspannungswert ist, die Steuereinheit dazu eingerichtet ist, das jeweilige Schaltelement derart zu schalten, dass es eingeschaltet ist, und einem Strom zu erlauben, in dem jeweiligen Ausgleichswiderstand zu fließen, um seine jeweilige Batteriezelle zu entladen, und
eine jeweilige Selbstentladeeinheit (130), welche parallel zu ihrem jeweiligen Schaltelement geschaltet ist, so dass die Spannung ihrer jeweiligen Batteriezelle als eine inverse Spannung an der jeweiligen Selbstentladeeinheit (130) angelegt wird, wobei die jeweilige Selbstentladeeinheit dazu eingerichtet ist, zu verhindern, dass die Batteriezelle überladen wird, indem ihre jeweilige Batteriezelle (11) entladen wird, wenn eine Spannung der jeweiligen Batteriezelle (11) während eines Nicht-Betriebs der jeweiligen Ausgleichseinheit (110) einen vorbestimmten ersten Referenzspannungswert überschreitet, so dass, wenn der Spannungswert der jeweiligen Batteriezelle (11) den ersten Referenzspannungswert überschreitet, die jeweilige Selbstentladeeinheit (130) dazu eingerichtet ist, den Strom elektrisch zu leiten, welcher von der jeweiligen Batteriezelle (11) zu dem jeweiligen Ausgleichswiderstand (112) fließt, um die jeweilige Batteriezelle (11) zu entladen.

2. Vorrichtung nach Anspruch 1, wobei jede Selbstentladeeinheit (130) eine beliebige aus einer Zenerdiode und einer Transienten-Spannung-Unterdrückung (TVS)-Diode ist.

3. Vorrichtung nach Anspruch 2, wobei jede Selbstentladeeinheit (130) die Zenerdiode ist, und wobei der erste Referenzspannungswert ein Durchbruchsspannungswert der Zenerdiode ist.

4. Verfahren zum Ausgleichen einer Batterie (10), wobei das Verfahren umfasst:
Bereitstellen einer Mehrzahl von Ausgleichseinheiten (110), welche mit einer Mehrzahl jeweiliger Batteriezellen (11) verbunden sind, welche in der Batterie (10) umfasst sind, um ein Ausgleichen jeder Batteriezelle (11) durchzuführen, wobei die Mehrzahl jeweiliger Batteriezellen (11) zueinander in Reihe geschaltet sind, wobei jede Ausgleichseinheit (110) umfasst:
einen jeweiligen Ausgleichswiderstand (112), welcher ein erstes Ende und ein zweites Ende aufweist, wobei das erste Ende mit dem positiven Anschluss seiner jeweiligen Zellenbatterie verbunden ist,
wobei der jeweilige Ausgleichswiderstand dazu eingerichtet ist, Leistung seiner jeweiligen Batteriezelle (11) zu verbrauchen; und
ein jeweiliges Schaltelement (111), welches durch eine MOSFET-Vorrichtung gebildet ist, welche einen Drain-Anschluss (D), einen Gate-Anschluss (G) und einen Source-Anschluss (S) aufweist, wobei der Drain-Anschluss mit dem zweiten Ende des jeweiligen Ausgleichswiderstands verbunden ist, wobei der Source-Anschluss (S) mit einem negativen Anschluss der jeweiligen Batteriezelle verbunden ist, wobei das Schaltelement dazu eingerichtet ist, einen Strom, welcher von der jeweiligen Batteriezelle (11) zu dem jeweiligen Ausgleichswiderstand (112) fließt, zu leiten oder zu blockieren;
Steuern, durch eine Steuereinheit (120), welche mit dem Gate-Anschluss der MOSFET-Vorrichtung verbunden ist und dazu eingerichtet ist, einen Betrieb der Ausgleichseinheit (110) in Reaktion auf einen Spannungswert ihrer jeweiligen Batteriezelle (11) zu steuern, wobei, wenn der Spannungswert ihrer jeweiligen Batteriezelle gleich wie oder größer als ein vorbestimmter zweiter Referenzspannungswert ist, die Steuereinheit dazu eingerichtet ist, das jeweilige Schaltelement derart zu schalten, dass es eingeschaltet ist, und einem Strom zu erlauben, in dem jeweiligen Ausgleichswiderstand zu fließen, um seine jeweilige Batteriezelle zu entladen, und
Entladen, durch eine jeweilige Selbstentladeeinheit (130), welche parallel zu ihrem jeweiligen Schaltelement geschaltet ist, so dass die Spannung ihrer jeweiligen Batteriezelle als eine inverse Spannung an der jeweiligen Selbstentladeeinheit (130) angelegt wird, wobei die jeweilige Selbstentladeeinheit dazu eingerichtet ist, zu verhindern, dass die Batteriezelle überladen wird, indem ihre jeweilige Batteriezelle (11) entladen wird, wenn ein Spannungswert der jeweiligen Batteriezelle (11) während eines Nicht-Betriebs der jeweiligen Ausgleichseinheit (110) einen vorbestimmten ersten Referenzspannungswert überschreitet, so dass, wenn das jeweilige Schaltelement (111) nicht betrieben wird und der Spannungswert der jeweiligen Batteriezelle (11) den ersten Referenzspannungswert überschreitet, die jeweilige Selbstentladeeinheit (130) dazu eingerichtet ist, den Strom elektrisch zu leiten, welcher von der jeweiligen Batteriezelle (11) zu dem jeweiligen Ausgleichswiderstand (112) fließt, um die jeweilige Batteriezelle (11) zu entladen.

5. Verfahren nach Anspruch 4, wobei jede Selbstentladeeinheit (130) eine beliebige aus einer Zenerdiode und einer Transienten-Spannung-Unterdrückung (TVS)-Diode ist.

6. Verfahren nach Anspruch 5, wobei jede Selbstentladeeinheit (130) die Zenerdiode ist, und wobei der erste Referenzspannungswert ein Durchbruchsspannungswert der Zenerdiode ist.

## Revendications

1. Appareil (100) pour l'équilibrage d'une batterie (10), l'appareil (100) comprenant :
une pluralité d'unités d'équilibrage (110) qui sont connectées à une pluralité d'éléments de batterie (11) respectifs compris dans la batterie (10), dans lequel la pluralité d'éléments de batterie (11) respectifs sont connectés en série les uns aux autres,
dans lequel chaque unité d'équilibrage est configurée pour réaliser un équilibrage de son élément de batterie (11) respectif, dans lequel chaque unité d'équilibrage comprend :
une résistance d'équilibrage (112) respective ayant une première extrémité et une deuxième extrémité, la première extrémité étant connectée à la borne positive de son élément de batterie respectif, dans lequel la résistance d'équilibrage est configurée pour consommer de l'énergie de son élément de batterie (11) respectif ; et
un élément de commutation (111) respectif formé par un dispositif transistor à effet de champ à semi-conducteur à oxyde métallique, MOSFET, ayant une borne de drain (D), une borne de grille (G) et une borne de source (S), dans lequel la borne de drain est connectée à la deuxième extrémité de la résistance d'équilibrage respective, la borne de source (S) est connectée à une borne négative de l'élément de batterie respectif, dans lequel l'élément de commutation est configuré pour conduire ou bloquer un courant circulant de l'élément de batterie (11) respectif à la résistance d'équilibrage (112) respective ;
une unité de commande (120) connectée à la borne de grille du dispositif MOSFET et configurée pour commander un fonctionnement de l'unité d'équilibrage (110) respective en réponse à une valeur de tension de son élément de batterie (11) respectif, dans lequel lorsque la valeur de tension de son élément de batterie respectif est égale ou supérieure à une deuxième valeur de tension de référence prédéterminée, l'unité de commande est configurée pour commuter l'élément de commutation respectif afin qu'il soit passant et permettre à un courant de circuler dans la résistance d'équilibrage respective pour décharger son élément de batterie respectif ; et
une unité d'autodécharge (130) respective connectée en parallèle à son élément de commutation respectif de sorte que la tension de son élément de batterie respectif soit appliquée comme une tension inverse à l'unité d'autodécharge (130) respective, dans lequel l'unité d'autodécharge respective est configurée pour empêcher l'élément de batterie d'être surchargé par la décharge de son élément de batterie respectif (11) lorsqu'une tension de l'élément de batterie (11) respectif dépasse une première valeur de tension de référence prédéterminée pendant un non-fonctionnement de l'unité d'équilibrage (110) respective, de sorte que lorsque la valeur de tension de l'élément de batterie (11) respectif dépasse la première valeur de tension de référence,
l'unité d'autodécharge (130) respective soit configurée pour conduire électriquement le courant circulant de l'élément de batterie (11) respectif à la résistance d'équilibrage (112) respective pour décharger l'élément de batterie (11) respectif.

2. Appareil selon la revendication 1, dans lequel chaque unité d'autodécharge (130) est l'une quelconque parmi une diode zener et une diode de suppression de tension transitoire (TVS).

3. Appareil selon la revendication 2, dans lequel chaque unité d'autodécharge (130) est la diode zener, et dans lequel la première valeur de tension de référence est une valeur de tension de claquage de la diode zener.

4. Procédé d'équilibrage d'une batterie (10), le procédé comprenant :
la fourniture d'une pluralité d'unités d'équilibrage (110) qui sont connectées à une pluralité d'éléments de batterie (11) respectifs compris dans la batterie (10) pour réaliser un équilibrage de chaque élément de batterie (11), dans lequel la pluralité d'éléments de batterie (11) respectifs sont connectés en série les uns aux autres, chaque unité d'équilibrage (110) comprenant :
une résistance d'équilibrage (112) respective ayant une première extrémité et une deuxième extrémité, la première extrémité étant connectée à la borne positive de son élément de batterie respectif, dans lequel la résistance d'équilibrage respective est configurée pour consommer de l'énergie de son élément de batterie (11) respectif ; et
un élément de commutation (111) respectif formé par un dispositif transistor à effet de champ à semi-conducteur à oxyde métallique, MOSFET, ayant une borne de drain (D), une borne de grille (G) et une borne de source (S), dans lequel la borne de drain est connectée à la deuxième extrémité de la résistance d'équilibrage respective, la borne de source est connectée à une borne négative de l'élément de batterie respectif, dans lequel l'élément de commutation est configuré pour conduire ou bloquer un courant circulant de l'élément de batterie (11) respectif à la résistance d'équilibrage (112) respective ;
la commande, par une unité de commande (120) connectée à la borne de grille du dispositif MOSFET et configurée pour commander un fonctionnement de l'unité d'équilibrage (110) en réponse à une valeur de tension de son élément de batterie (11) respectif, dans lequel lorsque la valeur de tension de son élément de batterie respectif est égale ou supérieure à une deuxième valeur de tension de référence prédéterminée, l'unité de commande est configurée pour commuter l'élément de commutation respectif afin qu'il soit passant et permettre à un courant de circuler dans la résistance d'équilibrage respective pour décharger son élément de batterie respectif ; et
la décharge, par une unité d'autodécharge (130) respective connectée en parallèle à son élément de commutation respectif de sorte que la tension de son élément de batterie respectif soit appliquée comme une tension inverse à l'unité d'autodécharge (130) respective, dans lequel l'unité d'autodécharge respective est configurée pour empêcher l'élément de batterie d'être surchargé par la décharge de son élément de batterie respectif (11) lorsqu'une valeur de tension de l'élément de batterie (11) respectif dépasse une première valeur de tension de référence prédéterminée pendant un non-fonctionnement de l'unité d'équilibrage (110) respective, de sorte que lorsque l'élément de commutation (111) respectif n'est pas en fonctionnement et la valeur de tension de l'élément de batterie (11) respectif dépasse la première valeur de tension de référence, l'unité d'autodécharge (130) respective soit configurée pour conduire électriquement le courant circulant de l'élément de batterie (11) respectif à la résistance d'équilibrage (112) respective pour décharger l'élément de batterie (11) respectif.

5. Procédé selon la revendication 4, dans lequel chaque unité d'autodécharge (130) est l'une quelconque parmi une diode zener et une diode de suppression de tension transitoire (TVS).

6. Procédé selon la revendication 5, dans lequel chaque unité d'autodécharge (130) est la diode zener, et dans lequel la première valeur de tension de référence est une valeur de tension de claquage de la diode zener.
